# NEUE EUROPÄISCHE PATENTSCHRIFT

(11) **EP 1 210 388 B2**
(45) Veröffentlichungstag und Bekanntmachung des Hinweises auf die Entscheidung über den Einspruch: **19.03.2008**
(45) Hinweis auf die Patenterteilung: 23.06.2004
(21) Anmeldenummer: 00956384.2
(22) Anmeldetag: 03.08.2000
(51) Int. Cl.: C08K 5/42

(54) **ANTISTATIKUM**
ANTISTATIC AGENT
AGENT ANTISTATIQUE

(30) Priorität: 16.08.1999 DE 19938735; 13.09.1999 DE 19943637
(43) Veröffentlichungstag der Anmeldung: 05.06.2002
(73) Patentinhaber: Bayer MaterialScience AG, 51368 Leverkusen (DE)
(72) Erfinder: DÖBLER, Martin, D-40593 Düsseldorf (DE); KÖHLER, Walter, D-47239 Duisburg (DE); BIER, Peter, D-47800 Krefeld (DE); EBERT, Wolfgang, D-47800 Krefeld (DE); GORNY, Rüdiger, D-47800 Krefeld (DE); NEUMANN, Siegfried, D-47918 Tönisvorst (DE)
(86) Internationale Anmeldenummer: PCT/EP2000/007524
(87) Internationale Veröffentlichungsnummer: WO 2001/012713

(56) Entgegenhaltungen:
- EP-A- 0 340 618
- EP-A- 0 897 950
- DE-A- 4 222 448
- US-A- 4 093 589
- US-A- 4 112 206
- US-A- 4 570 197
- US-A- 4 976 741

## Beschreibung

Die Anmeldung betrifft die Verwendung von fluorierten Alkylsulfonsäuresalzen als Antistatikum in Polycarbonat sowie Kunststoffe enthaltend fluorierte Alkylsulfonsäuresalze und daraus herstellbare Formkörper.

Bei Kunststoffformkörpern ist die Anlagerung von Staub unter Ausbildung von Staubfiguren ein weit verbreitetes Problem. Siehe hierzu z.B. Saechtling, Kunststoff-Taschenbuch, 26. Ausgabe, Hanser Verlag, 1995, München, S. 140 f. Besonders störend und die Funktion einschränkend sind Staubablagerungen bei transparenten Formkörpern. Solche Formkörper werden zum Beispiel für den Bereich optische Datenspeicher, Elektrotechnik, Automobilbau, im Bausektor, für Flüssigkeitsbehälter oder für andere optische Anwendungen eingesetzt. Für all diese Anwendungen ist eine Staubanlagerung unerwünscht und kann die Funktion beeinträchtigen.

Eine bekannte Methode die Staubanlagerung auf Kunststoffkörpern zu vermindern ist der Einsatz von Antistatika. In der Literatur sind für Thermoplasten Antistatika beschrieben (siehe z.B. Gächter, Müller, Plastic Additives, Hanser Verlag, München, 1996, S. 749 ff), welche die Staubanlagerung einschränken. Diese Antistatika verbessern die elektrische Leitfähigkeit der Kunststoffformmassen und leiten so Oberflächenladungen, welche sich bei der Herstellung und beim Gebrauch bilden ab. Somit werden Staubpartikel weniger angezogen und folglich gibt es eine geringere Staubanlagerung.

Bei den Antistatika unterscheidet man im allgemeinen zwischen internen und externen Antistatika. Ein externes Antistatikum wird nach der Verarbeitung auf den Kunststoffformkörper aufgetragen, ein internes Antistatikum wird als Additiv den Kunststoffformmassen zugesetzt. Aus wirtschaftlichen Gründen ist die Verwendung von internen Antistatika meist wünschenswert, da keine weiteren Arbeitsschritte zur Auftragung des Antistatikums nach der Verarbeitung nötig ist. In der Literatur sind bislang wenige interne Antistatika beschrieben worden, welche auch völlig transparente Formkörper insbesondere mit Polycarbonat bilden. JP-06228420 A 940816 beschreibt aliphatische Sulfonsäureammoniumsalze in Polycarbonat als Antistatikum. Diese Verbindungen führen jedoch zu Molekulargewichtsabbau. JP-62230835 beschreibt den Zusatz von 4 % Nonylphenylsulfonsäuretetrabutyl-phosphonium in Polycarbonat.

Ein Nachteil der bekannten Antistatika ist, dass diese in relativ hohen Konzentrationen eingesetzt werden müssen, um den antistatischen Effekt zu erzielen. Dadurch werden aber die Materialeigenschaften der Kunststoffe in unerwünschter Weise verändert.

Aufgabe der Erfindung ist daher die Bereitstellung von Antistatika, die die Materialeigenschaften von Kunststoffen nicht negativ beeinflussen.

Es wurde überraschend gefunden, dass sich Perfluoralkylsulfonsäuresalze als Antistatika besonders gut zur Herstellung von gespritzten und extrudierten Formkörpern eignen. Schon mit geringen Mengen Perfluoralkylsulfonsäuresalz lassen sich Formkörper herstellen die keinen Staub mehr anlagern.

Gegenstand der Anmeldung ist daher die Verwendung von Perfluoralkylsulfonsäuresalzen als Antistatika für Polycarbonate insbesondere für transparente Polycarbonate, sowie Kunststoffe, Kunststoffformmassen und Kunststoffformkörper enthaltend mindestens ein Perfluoralkylsulfonsäuresalz.

Als Perfluoralkylsulfonsäuresalze sind geeignet die Salze vom Typ (I)

RA-SO₃ X (I)

in welcher
- R: perfluorierte lineare oder verzweigte Kohlenstoffketten mit 1 bis 30 Kohlenstoffatomen, bevorzugt 4 bis 8 Kohlenstoffatomen;
- A: eine direkte Bindung oder fluoriertes oder nichtfluoriertes o-, m- oder p-Phenylen;
- X: alkyliertes und/oder aryliertes Ammoniumion NR'R"R'"R"", Sulfoniumion SR'R"R"', sowie substituiertes oder nichtsubstituiertes Imidazoliniumion, Pyridiniumion oder Tropyliumion, worin R', R", R'", R"" jeweils unabhängig voneinander für halogenierte oder nicht-halogenierte lineare oder verzweigte Kohlenstoffketten mit 1 bis 30 Kohlenstoffatomen, bevorzugt 1 bis 4 Kohlenstoffatomen, insbesondere Methyl, Ethyl, Propyl, Butyl, Pentyl, Hexyl, Isopropyl, Isobutyl, tert-Butyl, Neopentyl oder aromatische Reste oder alkylaromatische Reste mit 1 bis 4 Kohlenstoffatomen im jeweiligen Alkylteil wie beispielhaft und vorzugsweise Phenyl, Benzyl, Alkylphenyl mit 1 bis 4 Kohlenstoffatomen im jeweiligen Alkylteil, steht;
bedeuten.

Bevorzugt sind:
- Perfluoroctansulfonsäuretetraethylammoniumsalz,
- Perfluorbutansulfonsäuretetraethylammoniumsalz,
- Perfluoroctansulfonsäurebenzyltrimethylammoniumsalz,
- Perfluorbutansulfonsäurebenzyltrimethylammoniumsalz,
- Perfluoroctansulfonsäuretrimethylphenylammoniumsalz,
- Perfluorbutansulfonsäuretrimethylphenylammoniumsalz,
- Perfluorbutansulfonsäuredimethyldiphenylammoniumsalz,
- Perfluoroctansulfonsäuredimethyldiphenylammoniumsalz,
- Perfluorbutansulfonsäuretrimethylneopentylammoniumsalz,
- Perfluoroctansulfonsäuretrimethylneopentylammoniumsalz,
- Perfluorbutansulfonsäuredimethyldineopentylammoniumsalz,
- Perfluoroctansulfonsäuredimethyldineopentylammoniumsalz.

Bevorzugt sind auch Mischungen von Sulfonsäuresalzen, insbesondere der oben genannten Sulfonsäuresalze.

Besonders bevorzugt ist das Perfluoroctansulfonsäuretetraethyl-ammoniumsalz.

Die Perfluoralkylsulfonsäuren sind bekannt oder können nach bekannten Methoden hergestellt werden. Die Salze der Sulfonsäuren lassen sich durch Zusammengeben äquimolarer Mengen der freien Sulfonsäure mit der Hydroxyform des entsprechenden Kations in Wasser bei Raumtemperatur und Einengen der Lösung darstellen.

Die Perfluoralkylsulfonsäuren werden vorzugsweise in Mengen von 0,001 bis 2 Gew.-%, bevorzugt von 0,1 bis 1 Gew.-% den Kunststoffen zugesetzt.

Unter Kunststoff sind vorzugsweise Thermoplaste, insbesondere transparente Thermoplaste, bevorzugt die Polymerisate von ethylenisch ungesättigten Monomeren und/oder Polykondensate von bifunktionellen reaktiven Verbindungen, zu verstehen.

Besonders geeignete Kunststoffe sind Polycarbonate oder Copolycarbonate auf Basis von Diphenolen, der Poly- oder Copolyacrylate und Poly- oder Copolymethacrylate wie beispielhaft und vorzugsweise Polymethylmethacrylat, Poly- oder Copolymere mit Styrol wie beispielhaft und vorzugsweise transparentes Polystyrol oder Polystyrolacrylnitril (SAN), transparente thermoplastische Polyurethane, sowie Polyolefine, wie beispielhaft und vorzugsweise transparente Polypropylentypen oder Polyolefine auf der Basis von cyclischen Olefinen (z.B. TOPAS®, Hoechst), Poly- oder Copolykondensate der Terephthalsäure, wie beispielhaft und vorzugsweise Poly- oder Copolyethylenterephthalat (PET oder CoPET) oder glycol-modifiziertes PET (PETG).

Insbesonders bevorzugt sind Polycarbonate oder Copolycarbonate, insbesondere nicht halogenierten Polycarbonate und/oder Copolycarbonate mit Molekulargewichten M̅_{W} von 500 bis 100 000, bevorzugt von 10 000 bis 50 000, besonders bevorzugt von 15 000 bis 40 000.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Die erfindungsgemäßen Polycarbonate können auch ganz oder teilweise bromiert vorliegen.

Die Herstellung dieser Polycarbonate erfolgt in bekannter Weise aus Diphenolen, Kohlensäurederivaten, gegebenenfalls Kettenabbrechem und gegebenenfalls Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Diphenole bei der Polycarbonatherstellung sind bevorzugte:
4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Bevorzugte Verzweiger sind Triphenole, Trimesinsäure(trichlorid), Cyanursäuretrichlorid und 3,3-Bis-(3-methyl-4-hydroxyphenyl)-2-oxo-2,3-dihydroindol.

Es ist zur Erreichung von verbesserten Kunststoffzusammensetzungen möglich, dass zusätzlich noch mindestens ein weiterer in thermoplastischen Kunststoffen, bevorzugt Poly- und Copolycarbonaten, üblicherweise vorhandener Zusatzstoff wie z.B. Stabilisatoren (wie z.B. in EP 0 839 623 A1 oder EP 0 500 496 A1 beschrieben) besonders Thermostabilisatoren, insbesondere organische Phosphite oder Phosphine, beispielhaft und vorzugsweise Triphenylphosphin, Entformungsmittel, beispielhaft und vorzugsweise Fettsäureester des Glycerins oder Tetramethanolmethans, wobei ungesättigte Fettsäure auch ganz oder teilweise epoxidiert sein können, insbesondere Glycerinmonostearat oder Pentaerythrittetrastearat (PETS), Flammschutzmittel, UV-Absorber, beispielhaft und vorzugsweise Hydroxy-Benzotriazole und Hydroxytriazine, Füllmittel, Schaummittel, Farbstoffen, Pigmente, optische Aufheller, Umesterungskatalysatoren und Nukleierungsmittel o.ä. bevorzugt in Mengen von jeweils bis zu 5 Gew.-%, bevorzugt 0,01 bis 5 Gew.-% bezogen auf die gesamte Mischung, besonders bevorzugt 0,01 Gew.-% bis 1 Gew.-% bezogen auf die Menge Kunststoff eingearbeitet wird.

Die Einarbeitung der Perfluoralkylsulfonsäuresalze sowie gegebenenfalls der Zusatzstoffe oder Mischungen der Zusatzstoffe erfolgt in allgemein üblicher Weise zum Beispiel vor oder während der Polymerisation oder durch nachträgliches Vermischen mit dem Kunststoff.

Die so erhaltenen Kunststoffzusammensetzungen liegen im allgemeinen in Form von Lösungen Dispersionen, Emulsionen, Stäuben, Pulvern, Granulaten, Plättchen oder Schuppen vor (Formmassen) und werden zur Herstellung von geformten Gegenständen (Formkörper) verwendet.

Geformte Gegenstände sind beispielhaft und vorzugsweise lichtdurchlässige Gegenstände wie beispielhaft und vorzugsweise Lichtstreuscheiben für Kraftfahrzeuge, Linsen wie z.B. Brillengläser, Folien, Bändchen, Platten, Stegplatten, Stegmehrfachplatten, Gefäße, Rohre und sonstige Profile die nach den üblichen Methoden, wie z.B. Heißpressen, Spinnen, Extrudieren oder Spritzgießen hergestellt werden. Die Polymerzusammensetzungen können auch zu Gießfolien verarbeitet werden.

Von Interesse ist auch die Verwendung der erfindungsgemäßen Kunststoffzusammensetzung zur Herstellung von Mehrschichtsystemen. Hierbei wird die erfindungsgemäßen Kunststoffzusammensetzung in dünner Schicht auf einen geformten Gegenstand aus einem Kunststoff welcher nicht antistatisch ausgerüstet ist, aufgebracht. Das Aufbringen kann zugleich mit oder unmittelbar nach der Formgebung des Formkörpers geschehen, zum Beispiel durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung

Ferner ist von Interesse die Verwendung der erfindungsgemäßen Kunststoffzusammensetzungen zur Herstellung von Gehäusen für elektrische und elektronische Geräte, wie z.B. Fernseher, Monitore, Computer, Drucker, Mobiltelefone, Uhren, HiFi-Anlagen und ähnliches sowohl in transparenter, transluzenter oder gedeckter Einstellung, optional auch flammgeschützt ausgerüstet in beliebigen Farbeinstellungen.

Bevorzugt werden Perfluoralkylsulfonsäureammoniumsalze enthaltende Kunststoffzusammensetzungen zur Herstellung von Lichtstreuscheiben für Kraftfahrzeuge verwendet.

Von besonderem Interesse ist auch die Verwendung von Perfluoralkylsulfonsäuresalze enthaltende Kunststoffzusammensetzungen zur Herstellung von Platten, Stegdoppelplatten, Coexplatten und Folien.

Der Vorteil der mit den erfindungsgemäßen Antistatika ausgerüsteten Kunststoffformkörper ist, dass diese sich nicht mehr, z.B. bei der Herstellung, beim Abziehen der üblicherweise verwendeten Schutzfolien oder bei Transport und Lagerung, elektrostatisch aufladen.

Die nachfolgenden Beispiele dienen zur Erläuterung der Erfindung. Die Erfindung ist nicht auf die Beispiele beschränkt. Prozentangaben bedeuten im folgenden Gewichtsprozente.

### Staubtest

Um die Staubanlagerung im Laborversuch zu untersuchen, werden die gespritzten Platten einer Atmosphäre mit aufgewirbeltem Staub ausgesetzt. Dazu wird ein 2-1-Becherglas mit einem 80 mm langen Magnetrührstab mit dreieckigem Querschnitt mit Staub (Kohlenstaub / 20 g Aktivkohle, Riedel-de Haen, Seelze, Deutschland, Artikel Nr. 18003) ca. 1 cm hoch gefüllt. Mit Hilfe eines Magnetrührers wird der Staub aufgewirbelt. Nach dem Stoppen des Rührers wird der Probekörper 7 sec lang dieser Staubatmosphäre ausgesetzt. Je nach verwendetem Probekörper setzt sich mehr oder weniger Staub auf den Probekörpern ab.

Die Beurteilung der Staubanlagerungen (Staubfiguren) wird visuell durchgeführt. Platten welche Staubfiguren aufwiesen wurden negativ (-) bewertet, praktisch staubfigurenfreie Platten mit (+) bewertet.

### Beispiel 1

Zur Herstellung der Probekörper wird ein additivfreies, unstabilisiertes Polycarbonat (Makrolon® 2808 der Bayer AG, Leverkusen) mit einem mittleren Molekulargewicht von ca. 30 000 (Mw nach GPC), Lösungsviskosität: η=1,293 bei 340°C auf einem Zweiwellenextuder mit der in Tabelle 1 angegebenen Menge von Perfluoroctansulfonsäuretetraethylammoniumsalz (Bayowet 248® der Bayer AG, Leverkusen) sowie den anderen angegebenen Zusatzstoffen kompoundiert und anschließend granuliert.

Aus diesem Granulat werden anschließend Rechteckplatten bei verschiedenen Massetemperaturen abgespritzt (155 mm x 75 mm x 2 mm) und dem Staubtest unterzogen. Die Ergebnisse werden in Tabelle 2 angegeben.

**Tabelle 1:**

| Kunststoffzusammensetzungen | |
|---|---|
| **Beispiel** | **Zusammensetzung** |
| 1.1 | % Bayowet 248® + 0,025 % Triphenylphosphin + 0,3 % 2-(2'-Hydroxy-3'-(2-butyl)-5'-(*tert*-butyl)-phenyl)-benzotriazol (Tinuvin® 350, Ciba Spezialitätenchemie, Basel) |
| 1.2 | 0,6 % Bayowet 248® + 0,025 % Triphenylphosphin + 0,3 % 2-(2'-Hydroxy-3'-(2-butyl)-5'-(*tert*-butyl)-phenyl)-benzotriazol |
| 1.3 | 0,4 % Bayowet 248® + 0,025 % Triphenylphosphin + 0,3 % 2-(2'-Hydroxy-3'-(2-butyl)-5'-(*tert*-butyl)-phenyl)-benzotriazol |
| 1.4 | 0,3 % Bayowet 248® + 0,025 % Triphenylphosphin + 0,3 % 2-(2'-Hydroxy-3'-(2-butyl)-5'-(*tert*-butyl)-phenyl)-benzotriazol |
| 1.5 | 0,25 % Bayowet 248® + 0,025 % Triphenylphosphin + 0,3 % 2-(2'-Hydroxy-3'-(2-butyl)-5'-(*tert*-butyl)-phenyl)-benzotriazol |
| 1.6 | 0,2 % Bayowet 248® + 0,025 % Triphenylphosphin + 0,3 % 2-(2'-Hydraxy-3'-(2-butyl)-5'-(*tert*-butyl)-phenyl)-benzotriazol |
| 1.7 | 0,15 % Bayowet 248® + 0,025 % Triphenylphosphin + 0,3 % 2-(2'-Hydroxy-3'-(2-butyl)-5'-(*tert*-butyl)-phenyl)-benzotriazol |
| 1.8 | 0,1 % Bayowet 248® + 0,025 % Triphenylphosphin + 0,3 % 2-(2'-Hydroxy-3'-(2-butyl)-5'-(*tert*-butyl)-phenyl)-benzotriazol |

Alle aus den Kunststoffzusammensetzungen der Beispiele 1.1 bis 1.8 bei Massetemperaturen a), b) und c) hergestellten Farbmusterplättchen sind visuell betrachtet völlig transparent.

**Tabelle 2:**

| Ergebnisse des Staubtestes | | | |
|---|---|---|---|
| **Beispiel** | **a.) 300 °C** | **b.) 320 °C** | **c.) 330 °C** |
| 1.1 | + | | |
| 1.2 | + | | |
| 1.3 | + | + | + |
| 1.4 | - | + | + |
| 1.5 | - | + | + |
| 1.6 | - | + | + |
| 1.7 | - | + | + |
| 1.8 | - | - | + |

### Beispiel 2:

Polycarbonatfolien der Dicke 0,25 mm auf Basis Polycarbonat Makrolon 3100® der Bayer AG, Leverkusen und den in Tabelle 3 angegebenen Anteilen an Antistatikum werden bei einer Massetemperatur von 280°C mittels Extrusion hergestellt. Die antistatische Wirkung wird durch Messung des spezifischen Oberflächenwiderstandes gemäß DIN IEC 93 (Ω) bestimmt.

**Tabelle 3:**

| Kunststofffolienzusammensetzung | | | |
|---|---|---|---|
| **Beispiel** | **Zusammensetzung** | **Staubtest** | **Oberflächenwiderstand** |
| 2.1 | Keine Zusätze | - | 1.0 10¹⁷ Ω |
| 2.2 | 0,3 % Bayowet 248® | + | 2.7 10¹⁵ Ω |
| 2.3 | 0,5 % Bayowet 248® | + | 8.2 10¹³ Ω |
| 2.4 | 1 % Bayowet 248® | + | 2.9 10¹³ Ω |
| 2.5 | 1,5 % Bayowet 248® | + | 6.0 10¹² Ω |

Der Oberflächenwiderstand verringert sich durch den Zusatz von 0,3 Gew.-% Bayowet® 248 um fast 2 Größenordnungen, bei Zusatz von 1,5 Gew.-% um mehr als 4 Größenordnungen. Dies ist signifikant besser, als bislang beschriebene Werte für Antistatika in diesem Konzentrationsbereich in Polycarbonat.

### Beispiel 3:

Die in Tabelle 4 angegebenen Zusammensetzungen werden gemäß Beispiel 1 hergestellt und dem Staubtest unterzogen. Die Perfluorbutansulfonsäure und Perfluoroctansulfonsäure lassen sich durch Einwirken von konzentrierter Schwefelsäure auf die Kaliumsalze der Sulfonsäuren freisetzen und durch Destillation isolieren. Die Kaliumsalze sind bei Aldrich bzw. Bayer AG, Leverkusen, erhältlich. Trimethylphenylammoniumhydroxid lässt sich aus Trimethylphenylammoniumchlorid (Aldrich) mittels Ionenaustausch über den Anionenaustauscher Lewatit® 500 (Bayer AG) herstellen. Tetraethylammoniumhydroxid und Benzyltrimethylammoniumhydroxid sind bei Aldrich erhältlich.

**Tabelle 4:**

| Kunststoffzusammensetzungen | | | |
|---|---|---|---|
| **Beispiel** | **Zusammensetzung** | **Massetemperatur** | **Staubtest** |
| 3.1 | 0.3 % Perfluorbutansulfonsäuretetraethylammoniumsalz + 0.025 % Triphenylphosphin + 0.3 % 2-(2'-Hydroxy-3'-(2-butyl)-5'-(*tert*-butyl)-phenyl)-benzotriazol | 320 °C | + |
| 3.2 | 0.3 % Perfluorbutansulfonsäurebenzyltrimethylammoniumsalz + 0.025 % Triphenylphosphin + 0.3 % 2-(2'-Hydroxy-3'-(2-butyl)-5'-(*tert*-butyl)-phenyl)-benzotriazol | 320 °C | + |
| 3.3 | 0.3 % Perfluoroctansulfonsäuretrimethylphenylammoniumsalz + 0.025 % Triphenylphosphin + 0.3 % 2-(2'-Hydroxy-3'-(2-butyl)-5'-(*tert*-butyl)-phenyl)-benzotriazol | 300°C | + |
| 3.4 | 1 % Perfluoroctansulfonsäuretetraethylammoniumsalz + 1 % Titandioxid Cronos C12230 + 0,2 % Perfluorbutansulfonsäure-Kaliumsalz (Bayer) + 0,09 % Teflon 6CN (DuPont) | 300°C | + |
| 3.5 | 1 % Perfluoroctansulfonsäuretetraethylammoniumsalz + 1 % Titandioxid Cronos C12230 | 300°C | + |

### Beispiel 4:

In Analogie zu Beispiel 1 werden Kunststoffzusammensetzungen aus Bayblend® (Blend aus ABS und Bisphenol-A-Polycarbonat der Bayer AG), Apec® (Copolycarbonat der Bayer AG) und Pocan® (unverstärktes Polybutylenterephthalat der Bayer AG) mit den in Tabelle 5 angegebenen Mengen an Antistatikum und Massetemperaturen hergestellt und dem Staubtest unterzogen. Die Ergebnisse werden in Tabelle 5 angegeben.

**Tabelle 5:**

| Wirkungsweise von Sulfonsäuresalzen in weiteren Thermoplasten | | | |
|---|---|---|---|
| **Beispiel** | **Zusammensetzung** | **Massetemperatur** | **Staubtest** |
| 4.1 | Bayblend FR2000® + 3 % Bayowet 248® | 250°C | + |
| 4.2 | Bayblend FR2000® + 1 % Bayowet 248® | 250°C | +/- |
| 4.3 | Bayblend T45® + 3 % Bayowet 248® | 270°C | + |
| 4.4 | Pocan B 1305® + 1 % Bayowet 248® | 260°C | + |
| 4.5 | Apec® HT KU1-9201=9330 + 0,5 % Bayowet 248® | 300°C | + |
| 4.6 | Apec® HT KU1-9201=9330 + 0,5 % Bayowet 248® | 340°C | + |

## Patentansprüche

1. Verwendung von Perfluoralkylsulfonsäuresalzen der Formel (I)
RA-SO₃X (I)
in welcher
R für perfluorierte lineare oder verzweigte Kohlenstoffketten mit 1 bis 30 Kohlenstoffatomen steht,
A für eine direkte Bindung oder für fluoriertes oder nichtfluoriertes o-, m- oder p-Phenylen steht,
X für alkyliertes und/oder aryliertes Ammoniumion NR'R"R"'R"", Sulfoniumion SR'R"R"', sowie substituiertes oder nichtsubstituiertes Imidazoliniumion, Pyridiniumion oder Tropyliumion steht, worin R', R", R"', R"" jeweils unabhängig voneinander für halogenierte oder nichthalogenierte lineare oder verzweigte Kohlenstoffketten mit 1 bis 30 Kohlenstoffatomen oder aromatische Reste oder alkylaromatische Reste mit 1 bis 4 Kohlenstoffatomen im jeweiligen Alkylteil, steht,
als antistatisches Additiv in Polycarbonat.

2. Kunststoffzusammensetzungen enthaltend mindestens ein Perfluoralkylsulfonsäuresalz der Formel (I)
RA-SO₃X (I)
in welcher
R für perfluorierte lineare oder verzweigte Kohlenstoffketten mit 4 bis 8 Kohlenstoffatomen steht,
A für eine direkte Bindung oder für fluoriertes oder nichtfluoriertes o-, m- oder p-Phenylen steht,
X für alkyliertes und/oder aryliertes Ammoniumion NR'R"R"'R"", Sulfoniumion SR'R"R"', sowie substituiertes oder nichtsubstituiertes Imidazoliniumion, Pyridiniumion oder Tropyliumion steht, worin R', R", R"', R"" jeweils unabhängig voneinander für halogenierte oder nichthalogenierte lineare oder verzweigte Kohlenstoffketten mit 1 bis 30 Kohlenstoffatomen oder aromatische Reste oder alkylaromatische Reste mit 1 bis 4 Kohlenstoffatomen im jeweiligen Alkylteil, steht.

3. Verfahren zur Herstellung von Kunststoffzusammensetzungen gemäß Anspruch 2, **dadurch gekennzeichnet, dass** man vor, während oder nach der Polymerisation der Kunststoffe mindestens ein Perfluoralkylsulfonsäuresalz gemäß Anspruch 2 zusetzt.

4. Verwendung von Perfluoralkylsulfonsäuresalz gemäß Anspruch 2 enthaltenden Kunststoffzusammensetzungen zur Herstellung von Formkörpern.

5. Verfahren zur Herstellung von antistatisch wirkenden Formkörpern, **dadurch gekennzeichnet, dass** man mindestens eine Kunststoffzusammensetzungen gemäß Anspruch 2 als Ausgangsmaterialien einsetzt.

6. Kunststoffformkörper enthaltend mindestens ein Perfluoralkylsulfonsäuresalz gemäß Anspruch 2.

## Claims

1. Use of compounds of the formula (I)
RA-SO₃ X (I)
in which
R denotes perfluorinated linear or branched carbon chains having 1 to 30 carbon atoms,
A denotes a direct bond or an aromatic nucleus,
X denotes an alkylated and/or arylated ammonium ion NR'R"R'"R"", phosphonium ion PR'R"R'"R"", sulfonium ion SR'R"R'", and a substituted or unsubstituted imidazolinium ion, pyridinium ion or tropylium ion, in which R', R", R'", R"" mutually independently denote halogenated or non-halogenated, linear or branched carbon chains having 1 to 30 carbon atoms, or aromatic residues or alkylaromatic residues in each case having 1 to 4 carbon atoms in the alkyl moiety;
as an antistatic additive in polycarbonate.

2. Plastics compositions containing at least one perfluoroalkylsulfonic acid salt according to claim 1.

3. A method for the production of plastics compositions according to claim 2, **characterised in that** at least one perfluoroalkylsulfonic acid salt according to claim 1 is added before, during or after polymerisation of the plastics.

4. Use of plastics compositions containing perfluoroalkylsulfonic acid salt according to claim 1 for the production of mouldings.

5. A method for the production of mouldings having antistatic properties, **characterised in that** at least one plastics composition according to claim 2 is used as the starting material.

6. Plastics mouldings containing at least one perfluoroalkylsulfonic acid salt according to claim 1.

## Revendications

1. Utilisation de sels d'acide perfluoroalkylsulfonique de formule (I)
RA-SO₃X (I)
dans laquelle
R représente des chaînes carbonées perfluorées, linéaires ou ramifiées, contenant 1 à 30 atomes de carbone,
A représente une liaison directe ou o-, m- ou p-phénylène fluoré ou non fluoré,
X représente un ion ammonium NR'R"R"'R"", un ion sulfonium SR'R"R"', alkylé et/ou arylé, ou un ion imidazolinium, pyridinium ou tropylium substitué ou non substitué, R', R", R"', R"" représentant chacun, indépendamment les uns des autres, des chaînes carbonées linéaires ou ramifiées, halogénées ou non halogénées de 1 à 30 atomes de carbone ou des radicaux aromatiques ou des radicaux alkylaromatiques avec 1 à 4 atomes de carbone dans la partie alkyle ;
en tant qu'additif antistatique dans un polycarbonate.

2. Compositions de résine synthétique contenant au moins un sel d'acide perfluoralkylsulfonique de formule (I)
RA-SO₃X (I)
dans laquelle
R représente des chaînes carbonées perfluorées, linéaires ou ramifiées, contenant 4 à 8 atomes de carbone,
A représente une liaison directe ou o-, m- ou p-phénylène fluoré ou non fluoré,
X représente un ion ammonium NR'R"R"'R"", un ion sulfonium SR'R"R"', alkylé et/ou arylé, ou un ion imidazolinium, pyridinium ou tropylium substitué ou non substitué, R', R", R"', R"" représentant chacun, indépendamment les uns des autres, des chaînes carbonées linéaires ou ramifiées, halogénées ou non halogénées de 1 à 30 atomes de carbone ou des radicaux aromatiques ou des radicaux alkylaromatiques avec 1 à 4 atomes de carbone dans la partie alkyle

3. Procédé pour la préparation des compositions de résine synthétique selon la revendication 2, **caractérisé en ce que**, avant, durant ou après la polymérisation, on ajoute aux résines synthétiques au moins un sel d'acide perfluoralkylsulfonique selon la revendication 2.

4. Utilisation de compositions de résine synthétique contenant un sel d'acide perfluoralkylsulfonique selon la revendication 2 pour la fabrication d'objets moulés.

5. Procédé pour la fabrication d'objets moulés à propriétés antistatiques, **caractérisé en ce qu'**on utilise comme matières premières au moins une composition de résine synthétique selon la revendication 2.

6. Objet moulé en résine synthétique contenant au moins un sel d'acide perfluoralkylsulfonique selon la revendication 2.
